(19)

Europäisches Patentamt
European Patent Office
Office européen des brevets

(11) **EP 1 116 612 B1**

(12) **EUROPEAN PATENT SPECIFICATION**

(45) Date of publication and mention
of the grant of the patent:
**23.05.2007 Bulletin 2007/21**

(51) Int Cl.:
***B60H 1/00*** *(2006.01)*

(21) Application number: **00127660.9**

(22) Date of filing: **18.12.2000**

(54) **Airconditioning and control system for controlling the climate in a vehicle compartment**

Klimaanlage und Regelvorrichung zur Klimatisierung des Innenraums von Kraftfahrzeugen

Dispositif de climatisation et système de commande du conditionnement d'air dans un habitacle d'un véhicule automobile

(84) Designated Contracting States:
**DE ES FR GB SE**

(30) Priority: **21.12.1999 IT TO991122**

(43) Date of publication of application:
**18.07.2001 Bulletin 2001/29**

(73) Proprietor: **FIAT AUTO S.p.A.**
**10135 Torino (IT)**

(72) Inventor: **Mingrino, Fabio**
**I-10128 Torino (IT)**

(74) Representative: **Quinterno, Giuseppe et al**
**Jacobacci & Partners S.p.A.**
**Corso Emilia, 8**
**10152 Torino (IT)**

(56) References cited:
**DE-A- 3 731 106**      **US-A- 4 482 092**
**US-A- 5 027 611**

• **PATENT ABSTRACTS OF JAPAN vol. 004, no. 139 (M-034), 30 September 1980 (1980-09-30) & JP 55 094809 A (NIPPON DENSO CO LTD), 18 July 1980 (1980-07-18)**

Printed by Jouve, 75001 PARIS (FR)

**Description**

The present invention relates to a system for controlling the climate in the passenger compartment of a motor vehicle.

More specifically, the invention relates to a climate-control system comprising an air-conditioning system including:

a duct for taking in air from outside the passenger compartment and at least one duct for taking in air from inside the passenger compartment,

means for heating the air-flow taken in and means for cooling the air-flow taken in,

at least one outlet duct for admitting air treated in the system to the passenger compartment,

circulation means for bringing about an air-flow in the system between one or other intake duct and the at least said one outlet duct,

a shut-off device which, when activated, can close the outside air-intake duct to allow the system to operate with air recirculated in the passenger compartment,

electrical sensor means for detecting the temperature of the air output by the air-conditioning system, and

an electronic control unit.

Climate-control systems of the prior art for motor-vehicle passenger compartments comprise sensors for detecting the temperature of the air in the passenger compartment. These sensors are of the ventilated type and are quite expensive. Moreover, the sensor is typically located in the vicinity of the electronic control unit so that the detection of the air temperature in the passenger compartment is adversely affected by the heat generated by the electronic unit in operation. Document DE 37 31 106, which is considered as the closest prior art, discloses such a system.

An object of the present invention is therefore to provide a system for controlling the climate in the passenger compartment of a motor vehicle which does not require a sensor suitable for detecting the temperature of the air in the passenger compartment.

This and other objects are achieved, according to the invention, by a control system the main characteristics of which are defined in appended Claim 1.

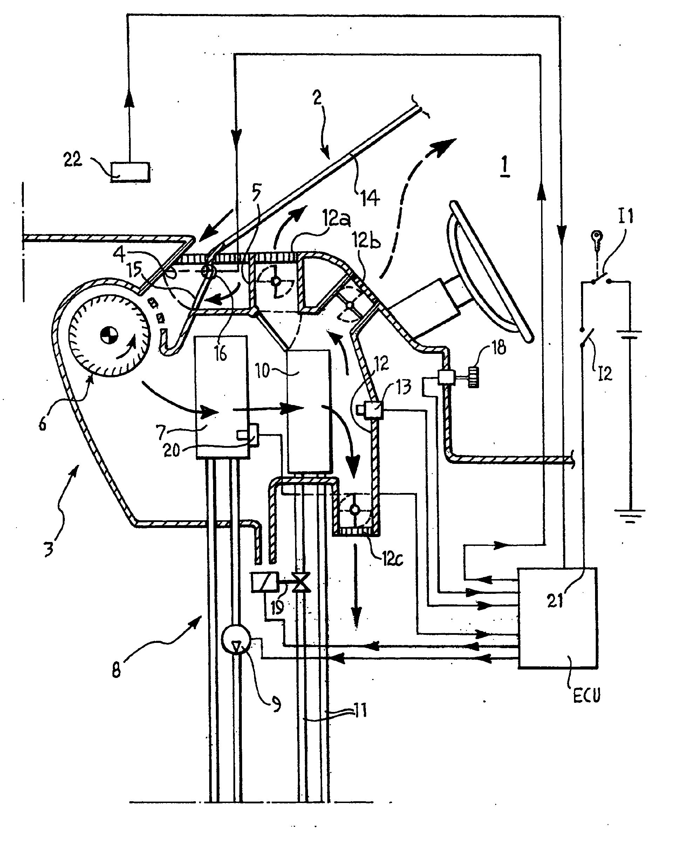

Further characteristics and advantages of the invention will become clear from the following detailed description, provided purely by way of non-limiting example with reference to the appended drawing which shows schematically a climate-control system according to the invention.

With reference to the drawing, a system for controlling the climate in the passenger compartment 1 of a motor vehicle 2 comprises an air-conditioning system, generally indicated 3. The system comprises an intake duct 4 for the inlet of air from outside the passenger compartment and at least one duct 5 for the intake of air from inside the passenger compartment.

Downstream of these ducts, the system 3 comprises an electric fan 6 which draws the air through the duct 4 or the duct 5 and causes it to flow, downstream, through the evaporator 7 of a cooling circuit 8 of known type, including a compressor 9.

Downstream of the evaporator 7, the air-flow induced by the fan 6 passes through a heat exchanger 10 acting as a heater. This exchanger is of the liquid/gas type and can receive a flow of the motor-vehicle's engine coolant liquid through a circuit 11.

An electrical temperature sensor 13 is disposed in a duct 12 for the outlet of the treated air.

The outlet duct 12 has a plurality of branches with respective outlet vents for the treated air. In the embodiment shown by way of example, there are outlet vents 12a in the vicinity of the lower edge of the windscreen 14, outlet vents 12b in the dashboard, as well as outlet vents 12c in the lower front portion of the passenger compartment, oriented towards the region occupied by the front passengers' feet.

A shutter, indicated 15 is disposed between the intake ducts 4 and 5. This shutter advantageously has an electrically-operated actuator 16 and can adopt a first position and a second position which are shown in solid outline and in broken outline, respectively, and in which it allows air to be taken in solely from outside the passenger compartment and solely from inside the passenger compartment, respectively. In the second position defined above, the shutter 15 allows the air-conditioning system 3 to operate with air circulated in the passenger compartment 1.

The system also comprises an electronic control unit ECU connected to the temperature sensor 13, to a device 18 for setting the desired temperature in the passenger compartment 1, to the actuator 16 associated with the shutter 15 and, optionally, but in known manner, to the compressor 9, to a solenoid valve 19 which controls the flow of engine coolant liquid in the circuit 11, and to a temperature sensor 20 associated with the evaporator 7.

The unit ECU is also connected to a temperature sensor 22 for detecting the temperature $T_e$ of the air outside the passenger compartment. This sensor may be disposed, for example, in an external rear-view mirror.

In contrast with climate-control systems according to the prior art, the system according to the invention does not comprise a specific sensor for detecting the temperature in the passenger compartment 1 directly.

The control unit ECU of the system according to the invention is, however, arranged to derive this temperature indirectly in the manner which will now be described.

The unit ECU is arranged to detect the presence of a supply voltage in the electrical system of the motor vehicle and the operation to activate the air-conditioning system 3.

For this purpose, the unit ECU has, for example, an input 21 which can be connected to the voltage supply B by means of an ignition switch I1 (incorporated, for example, in the ignition and starting switch of the vehicle) and a switch I2 which can be operated manually by the user in order to activate the air-conditioning system 3.

Each time the air-conditioning system is to be activated, the control unit ECU executes a preliminary procedure. During this preliminary procedure, the unit ECU is arranged to keep the cooling circuit 8 and the heater 10 deactivated and to activate the circulation fan 6 and the shut-off device 15-16 for a predetermined initial period of time so that, during this period of time, the air-conditioning system 3 takes in air from inside the passenger compartment 1, through the duct 5, and readmits the air, untreated, to the passenger compartment.

In these conditions, the unit ECU provides for a value for the temperature of the air circulated through the air-conditioning system 3 to be acquired by means of the sensor 13.

This temperature value can be assumed to be the initial value of the air temperature inside the passenger compartment.

The unit ECU is also arranged to calculate the instantaneous value of the air temperature inside the passenger compartment 1 after the above-mentioned initial period, by means of a predetermined mathematical estimation algorithm, on the basis of the initial value of this temperature, as defined above, during the initial period of time.

The estimation algorithm is advantageously based on a physical-mathematical model which can define the thermal behaviour of the motor vehicle. A physical-mathematical model of this type may be represented, for example, by a differential equation of the following type:

$$C \cdot \frac{dT_i}{dt} = h(T_e - T_i) + W \qquad\qquad (1)$$

in which

C is the equivalent heat capacity of the motor vehicle, which can be derived experimentally,

h is the equivalent thermal conductivity of the motor vehicle, which can also be derived experimentally,

t is time,

$T_e$ is the outside air temperature,

$T_i$ is the temperature of the air inside the passenger compartment 1, and

W is the heating power introduced in the passenger compartment; this power can be calculated substantially as the sum of the power $W_i$ generated by the air-conditioning system 3 and the thermal power $W_s$ due to solar radiation.

The differential equation (1) given above can be solved in discrete form by a solution of the following type:

$$Ti_{n+1} = a\ Ti_n + b\ U_n \qquad\qquad (2)$$

in which:

a, b can be determined on the basis of the values of C, h,

$Ti_n$ is the value of the air temperature inside the passenger compartment 1 at the time n,

$Ti_{n+1}$ is the value of the air temperature inside the passenger compartment at a time n+1, and

$U_n$ is a term which depends on the values of W and $T_e$ at the time n.

The electronic control unit ECU can thus be arranged to calculate the air temperature inside the passenger compartment 1 at any time on the basis of an equation such as equation (2) given above, by adopting, as the initial value $Ti_0$ of the temperature in the passenger compartment, the value derived as described above during the above-mentioned initial period.

Alternatively, during the initial period, the unit ECU may determine the value of the air temperature in the passenger compartment in the manner described above and may acquire the value $T_e$ of the air-temperature outside the passenger compartment by means of the sensor 22. As the initial value $Ti_0$ in the subsequent application of the algorithm for estimating the temperature in the passenger compartment, the unit ECU may be arranged to select the greater of the two values determined for the inside air and for the outside air, respectively, during the initial period. This enables the operation of the air-conditioning system 3 to be "forced", that is, intensified, particularly during summer when the motor vehicle is heated by solar radiation to a great extent.

Naturally, the principle of the invention remaining the same, the forms of embodiment and details of construction may be varied with respect to those described and illustrated purely by way of non-limiting example, without thereby departing from the scope of the invention as defined in the appended claims.

## Claims

1. A system for controlling the climate in the passenger compartment (1) of a motor vehicle (2) comprising an air-conditioning system (3) including:

   a duct (4) for taking in air from outside the passenger compartment (1) and at least one duct (5) for taking in air from inside the passenger compartment (1),
   means (10, 11) for heating the air-flow taken in and means (7-9) for cooling the air-flow taken in,
   at least one outlet duct (12) for admitting air treated in the system (3) to the passenger compartment (1),
   circulation means (6) for bringing about an air-flow in the system (3) between one or other intake duct (4 or 5) and the at least one outlet duct (12),
   a shut-off device (15, 16) which, when activated, can close the outside-air intake duct (4) to allow the system (3) to operate with air recirculated in the passenger compartment (1),
   electrical sensor means (13) for detecting the temperature of the air output by the air-conditioning system (3), and
   an electronic control unit (ECU),
   the system being **characterized in that** the control unit (ECU) is arranged to implement, prior to the activation of the air-conditioning system (3), an initial procedure in which it keeps the heating means (10, 11) and the cooling means (7-9) deactivated and activates the circulation means (6) and the said shut-off device (15, 16) for a predetermined initial period of time, so that, during this period of time, the air-conditioning system (3) takes in air from inside the passenger compartment (1) and readmits the air, untreated, to the passenger compartment (1), and
   to acquire, by means of the sensor means (13), a value for the temperature of the air circulated through the system (3) in these conditions.

2. A system according to Claim 1, also comprising further sensor means (22), connected to the control unit (ECU), for detecting the temperature of the air outside the passenger compartment (1), and in which the control unit (ECU) is arranged to calculate the instantaneous value of the air temperature inside the passenger compartment (1) after the initial period of time on the basis of the value of the temperature of the air circulated through the system (3) during the initial period and of the outside air temperature ($T_e$), by means of a predetermined mathematical estimation algorithm.

3. A system according to Claim 2, in which the control unit (ECU) is arranged to calculate the temperature of the air inside the passenger compartment (1) after the initial period of time, adopting, as the starting value for the said algorithm, the value of the temperature of the air circulated through the system (3) during the said initial period.

4. A system according to Claim 2, in which the control unit (ECU) is arranged to calculate the temperature of the air inside the passenger compartment (1) after the said initial period of time, adopting, as the starting value for the said algorithm, the greater of the temperature value of the air circulated through the system (3) during the initial period and the outside air-temperature value acquired during the said initial period.

**EP 1 116 612 B1**

**Patentansprüche**

1. System zur Klimatisierung des Fahrgastraums (1) eines Kraftfahrzeugs (2), umfassend eine Klimaanlage (3), die Folgendes einschließt:

   ein Rohr (4) zum Aufnehmen von Luft von außerhalb des Fahrgastraums (1) und zumindest ein Rohr (5) zum Aufnehmen von Luft von innerhalb des Fahrgastraums (1),
   Mittel (10, 11) zum Erhitzen des aufgenommenen Luftstroms und Mittel (7-9) zum Kühlen des aufgenommenen Luftstroms,
   zumindest ein Austrittsrohr (12) zum Hereinlassen von im System (3) behandelter Luft in den Fahrgastraum (1),
   Zirkulationsmittel (6) zum Verursachen eines Luftstroms im System (3) zwischen dem einen oder dem anderen Einlassrohr (4 oder 5) und dem zumindest einen Austrittsrohr (12),
   eine Absperrvorrichtung (15, 16), die bei Aktivierung das Außenluft-Einlassrohr (4) verschließen kann, um dem System (3) den Betrieb mit im Fahrgastraum (1) rezirkulierter Luft zu ermöglichen,
   elektrische Sensormittel (13) zum Ermitteln der Temperatur der von der Klimaanlage (3) freigesetzten Luft, und
   eine elektronische Steuereinheit (ECU),
   wobei das System **dadurch gekennzeichnet ist, dass** die Steuereinheit (ECU) dazu eingerichtet ist, vor der Aktivierung der Klimaanlage (3) eine Anfangsprozedur durchzuführen, bei der sie die Heizmittel (10, 11) und die Kühlmittel (7-9) deaktiviert hält und die Zirkulationsmittel (6) und die Absperrvorrichtung (15, 16) für einen vorbestimmten Anfangszeitraum aktiviert, so dass die Klimaanlage (3) während dieser Zeitperiode Luft von innerhalb des Fahrgastraums (1) aufnimmt und die Luft im unbehandelten Zustand wieder in den Fahrgastraum (1) lässt, und
   mittels der Sensormittel (13) einen Wert für die Temperatur der Luft zu erhalten, die unter diesen Bedingungen durch das System (3) zirkuliert wird.

2. System gemäß Anspruch 1, umfassend auch weitere, an der Steuereinheit (ECU) angeschlossene Sensormittel (22) zum Ermitteln der Temperatur der Luft außerhalb des Fahrgastraums (1), wobei die Steuereinheit (ECU) dazu eingerichtet ist, den momentanen Wert der Lufttemperatur im Inneren des Fahrgastraums (1) nach dem Anfangszeitraum basierend auf dem Wert der Temperatur der während der Anfangsperiode durch das System (3) zirkulierten Luft und der Außenlufttemperatur ($T_e$) zu berechnen, und zwar mit Hilfe eines vorbestimmten mathematischen Schätzalgorithmus.

3. System gemäß Anspruch 2, wobei die Steuereinheit (ECU) dazu eingerichtet ist, die Temperatur der Luft im Inneren des Fahrgastraums (1) nach dem Anfangszeitraum zu berechnen, wobei der Wert der Temperatur der während der Anfangsperiode durch das System (3) zirkulierten Luft als Ausgangswert für den Algorithmus eingesetzt wird.

4. System gemäß Anspruch 2, wobei die Steuereinheit (ECU) dazu eingerichtet ist, die Temperatur der Luft im Inneren des Fahrgastraums (1) nach dem Anfangszeitraum zu berechnen, wobei der größere Wert in Hinblick auf den Temperaturwert der während der Anfangsperiode durch das System (3) zirkulierten Luft und den während dieser Anfangsperiode erfassten Außenlufttemperaturwert als Ausgangswert für den Algorithmus eingesetzt wird.

**Revendications**

1. Système de commande de climatisation dans l'habitacle passagers (1) d'un véhicule à moteur (2) comprenant un système de conditionnement d'air (3), comprenant :

   un conduit (4) pour aspirer de l'air depuis l'extérieur de l'habitacle passagers (1) et au moins un conduit (5) pour aspirer de l'air depuis l'intérieur de l'habitacle passagers (1),
   des moyens (10, 11) pour chauffer le courant d'air aspiré et des moyens (7-9) pour refroidir le courant d'air aspiré,
   au moins un conduit de sortie (12) pour introduire l'air traité dans le système (3) dans l'habitacle passagers (1),
   des moyens de circulation (6) pour amener un courant d'air dans le système (3) entre l'un ou l'autre conduit d'admission (4 ou 5) et ledit au moins un conduit de sortie (12),
   un dispositif de fermeture (15, 16) qui, lorsqu'il est activé, peut fermer le conduit d'admission d'air extérieur (4) afin de permettre au système (3) de fonctionner avec l'air remis en circulation dans l'habitacle passagers (1),
   des moyens de capteur électriques (13) pour détecter la température de la sortie d'air par le système de conditionnement d'air (3), et
   une unité de commande électronique (UCE),

le système étant **caractérisé en ce que** l'unité de commande (UCE) est agencée pour exécuter, avant l'activation du système de conditionnement d'air (3), une procédure initiale dans laquelle il maintient les moyens de chauffage (10, 11) et les moyens de refroidissement (7-9) désactivés et

active les moyens de circulation (6) et le dispositif de fermeture (15, 16) pendant une période de temps initiale prédéterminée, de telle sorte que, pendant cette période de temps, le système de conditionnement d'air (3) aspire de l'air depuis l'intérieur de l'habitacle passagers (1) et réadmette l'air, non traité, dans l'habitacle passagers (1), et

pour acquérir, au moyen des moyens de capteur (13), une valeur pour la température de l'air remis en circulation à travers le système (3) dans ces conditions.

2. Système selon la revendication 1, comprenant en outre des moyens de capteur supplémentaires (22), connectés à l'unité de commande (UCE), pour détecter la température de l'air à l'extérieur de l'habitacle passagers (1), et dans lequel l'unité de commande (UCE) est conçue pour calculer la valeur instantanée de la température de l'air à l'intérieur de l'habitacle passagers (1) après la période de temps initiale sur la base de la valeur de la température de l'air remis en circulation à travers le système (3) pendant la période initiale et de la température de l'air extérieur ($T_e$), au moyen d'un algorithme d'estimation mathématique prédéterminé.

3. Système selon la revendication 2, dans lequel l'unité de commande (UCE) est conçue pour calculer la température de l'air à l'intérieur de l'habitacle passagers (1) après la période de temps initiale en adoptant, comme valeur de départ pour ledit algorithme, la valeur de la température de l'air remis en circulation à travers le système (3) pendant ladite période initiale.

4. Système selon la revendication 2, dans lequel l'unité de commande (UCE) est conçue pour calculer la température de l'air à l'intérieur de l'habitacle passagers (1) après ladite période de temps initiale en adoptant, comme valeur de départ pour ledit algorithme, la valeur la plus élevée parmi la valeur de la température de l'air remis en circulation à travers le système (3) pendant la période initiale et la valeur de la température de l'air extérieur acquise pendant ladite période initiale.